# FASCICULE DE BREVET EUROPEEN

(11) **EP 3 467 179 B1**
(45) Date de publication et mention de la délivrance du brevet: **01.02.2023**
(21) Numéro de dépôt: 17306328.0
(22) Date de dépôt: 04.10.2017
(51) Int. Cl.: B65G 23/44, B65G 47/252, D06B 17/00, D06B 23/04, B65G 15/14

(54) **MÉCANISME DE RETOURNEMENT**
UMKEHRMECHANISMUS
REVERSAL MECHANISM

(43) Date de publication de la demande: 10.04.2019
(73) Titulaire: SUPERBA (Société par Actions Simplifiée), 68100 Mulhouse (FR)
(72) Inventeur: LIEBMANN, Hubert, 68310 Wittelsheim (FR); MASSOTTE, Philippe, 68420 Gueberschwihr (FR)
(74) Mandataire: Cabinet Nuss

(56) Documents cités:
- EP-A1- 1 975 092
- EP-A1- 3 228 565
- GB-A- 1 047 151
- US-A- 2 494 731
- US-A- 4 365 395

## Description

La présente invention se rapporte au domaine des mécanismes de gestion de fils dans un dispositif de traitement thermique de fils et plus particulièrement au domaine des mécanismes de gestion du parcours de fils à l'intérieur d'un dispositif de traitement thermique.

Pour le traitement d'un faisceau de fils, notamment par traitement thermique ou vapeur, il est courant de faire traverser un faisceau de fils à l'intérieur d'une étuve. Cette opération s'effectue classiquement par dépose du faisceau de fils sur une bande transporteuse qui traverse une ou plusieurs étuves. La durée du traitement supporté par le faisceau de fils est alors fonction, d'une part, de la longueur de la bande transporteuse en déplacement dans l'étuve et, d'autre part, de la vitesse de déplacement de cette bande transporteuse.

Dans le cadre d'un traitement plus long du faisceau de fils, il devient nécessaire d'augmenter la longueur de l'étuve ou de ralentir la vitesse de déplacement de la bande transporteuse. Cependant, un ralentissement de la vitesse de déplacement de la bande transporteuse présente comme inconvénient d'impacter la production du faisceau de fils en la ralentissant. De même, une augmentation de la longueur de l'étuve génère des contraintes d'encombrement au sol plus importantes.

Un exemple de dispositif de traitement vapeur de fils est connu de l'art antérieur avec le brevet GB 1 047 151 A. Néanmoins, ce dispositif présente des limites en termes de maintien en position du ou des fils en cours de retournement.

D'autres dispositifs de retournement sont connus de l'état de la technique antérieure dans d'autres domaines tel que le brevet EP 1 975 092 A1 relatif aux produits pharmaceutiques.

La présente invention a pour but de pallier ces inconvénients en proposant un mécanisme qui, d'une part, autorise une adaptation du traitement thermique à des procédés de durées plus importantes et qui, d'autre part, permet de s'affranchir d'éventuels problèmes d'encombrement au sol.

L'invention a ainsi pour objet un dispositif de traitement thermique d'au moins un fil comprenant une structure formant une étuve comportant une première ouverture pour une entrée de fil et une seconde ouverture pour une sortie de fil, et comprenant un mécanisme de retournement d'un produit déposé entre une première bande de transport supérieure et une seconde bande de transport inférieure, la première bande de transport étant associée à au moins un cylindre à une extrémité, caractérisé en ce que le mécanisme de retournement comprend au moins un moyen de pincement de produit déposé contre la première bande de transport en déplacement sur une portion de la périphérie du cylindre.

L'invention porte sur un dispositif de traitement thermique de fils, caractérisé en ce que le dispositif comprend une structure formant une étuve comprenant une première ouverture pour une entrée de fil et une seconde ouverture pour une sortie de fil, et intégrant au moins deux bandes de transport superposées et au moins un mécanisme de retournement selon l'invention.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

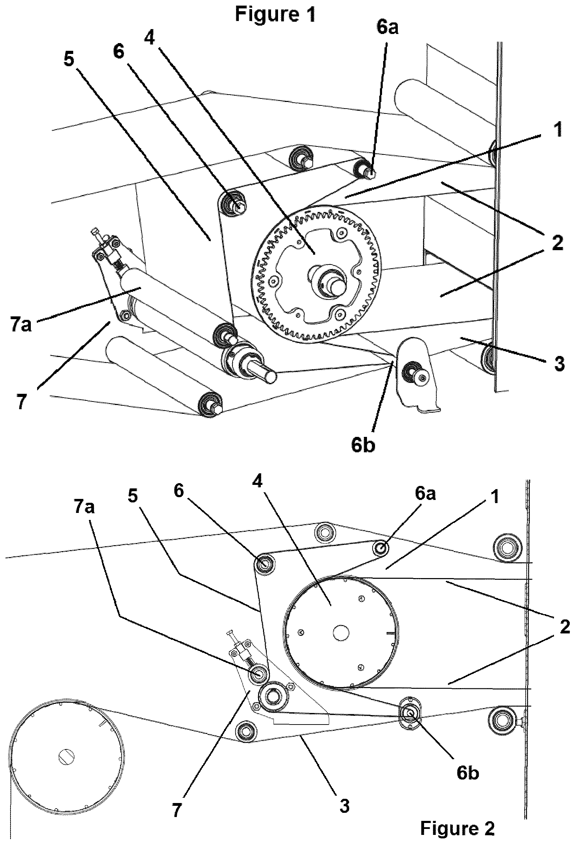

- la figure 1 est une représentation schématique d'un exemple de construction d'un mode de réalisation du mécanisme de retournement de l'invention dans lequel le moyen de pincement fait intervenir notamment une bande circulaire ;
- la figure 2 est une représentation schématique en section de l'exemple de construction selon la figure 1.

La présente invention porte sur un dispositif de traitement thermique d'au moins un fil comprenant une structure formant une étuve comportant une première ouverture pour une entrée de fil et une seconde ouverture pour une sortie de fil, et intégrant au moins deux bandes de transport superposées formées par une première bande de transport supérieure 2 et une seconde bande de transport inférieure 3 et au moins un mécanisme de retournement 1 d'un produit déposé entre la première bande de transport supérieure 2 et la seconde bande de transport inférieure 3, la première bande de transport 2 étant associée à au moins un cylindre 4 à une extrémité, caractérisé en ce que le mécanisme de retournement 1 comprend au moins un moyen de pincement de produit déposé contre la première bande de transport 2 en déplacement sur une portion de la périphérie du cylindre 4.

Le mécanisme de retournement 1 de l'invention autorise une superposition de plusieurs bandes de transport 2, 3 à l'intérieur d'un dispositif de traitement thermique de fils. Le mécanisme de retournement 1 permet d'assurer un transfert du produit entre la première bande supérieure 2 et la seconde bande inférieure 3 tout en conservant un agencement et une disposition similaire d'une bande de transport 2 à l'autre 3. Cette qualité du transfert est obtenu grâce à un moyen de pincement du produit qui presse le produit contre la bande de transport 2 supérieure en déplacement sur le cylindre 4. Cette pression du produit contre la bande de transport 2 en retournement contre le cylindre 4 permet un contrôle du déplacement du produit lors de son retournement et donc d'éviter une chute chaotique du produit lors de son transfert depuis une bande de transport supérieure 2 vers une bande de transport inférieure 3. Le mécanisme de pincement est ainsi arrangé pour maintenir le produit en position contre la bande de transport 2 supérieure au cours de la majeure partie de l'opération de retournement du produit. Lorsque le produit est retourné par le mécanisme de l'invention le transfert du produit et sa dépose sur la bande de transport inférieure 3 est alors réalisé par simple gravité.

Selon une première particularité de construction, le moyen de pincement comprend au moins une bande circulaire 5 entraînée autour de plusieurs rouleaux de guidage 6. La présence de ces différents rouleaux de guidage 6 permet une gestion du parcours de déplacement de la bande circulaire 5 de sorte que cette bande circulaire 5 puisse être déplacée avec fluidité sans être dégradée par des frottements ou interférences parasites. De même, la bande circulaire 5 peut être déplacée en pincement entre deux rouleaux de guidage fonctionnant en contre-rotation.

La mise en oeuvre du pincement du produit contre la première bande de transport 2 en déplacement sur le cylindre 4 grâce à une bande circulaire 5 permet de profiter de la flexibilité de la bande 5 pour opérer un pincement du produit en épousant la forme du produit déposé sur la surface de la bande de transport supérieure 2. Cette flexibilité de la bande circulaire 5 positionnée contre la bande de transport 2 permet au moyen de pincement de réaliser un maintien du produit sur l'ensemble de la portion du produit en contact avec la bande de transport 2 au niveau du cylindre 4. Par rapport à un moyen de pincement plus rigide, la bande circulaire 5 flexible permet d'éviter un maintien du produit en exerçant un contact et une pression uniquement au point de sa plus grande épaisseur au niveau de la portion du produit en contact avec la bande de transport 2 sur le cylindre 4. En effet, avec un moyen de pincement plus rigide, un contact au niveau de la seule plus grande épaisseur du produit conduit à un pincement du produit contre la bande de transport 2 strictement localisé, de sorte que les portions du produit d'épaisseurs inférieures à la plus grande épaisseur ne sont pas maintenues contre la bande de transport 2 lors du déplacement autour du cylindre 4. Le retournement du produit est alors réalisé avec une perte d'efficacité. Dans le cas où le produit déposé correspond à un faisceau de fils, la répartition des fils déposés sur la bande de transport supérieure 2 présente une variation d'épaisseur. Aussi, l'élasticité de la bande circulaire 5 tendue contre la bande de transport supérieure 2 permet de maintenir le faisceau de fil contre la bande de transport supérieure 2 en déplacement indépendamment de variations d'épaisseurs qui pourraient exister au niveau d'un point de contact entre le moyen de pincement et la bande de transport supérieure 2.

Selon un exemple de réalisation préféré, la bande circulaire 5 du moyen de pincement est réalisée dans une matière suffisamment souple dans sa longueur pour épouser les courbures des rouleaux de guidage 6 et du cylindre 4. De plus, la bande circulaire 5 présente également une souplesse dans sa largeur pour s'adapter aux variations de l'épaisseur du faisceau de fils étalé et en déplacement sur la bande de transport supérieure 2 et en rotation sur le cylindre 4.

Selon une construction préférée, la bande circulaire 5 est réalisée de façon à comporter une élasticité suffisante dans sa largeur pour s'adapter aux variations d'épaisseurs qui peuvent exister avec un faisceau étalé de fils déposé sur la bande 2 autour du cylindre 4 en rotation. Cette élasticité est également couplé à une résistance à la chaleur suffisante pour permettre un fonctionnement dans un environnement destiné à un traitement thermique du faisceau de fils en déplacement.

Selon différentes variantes de construction, la bande circulaire 5 peut être réalisée sous la forme d'une bande de plastique souple élastique, d'un film ou d'une membrane ou également sous la forme d'un tricot ou d'un filet ou encore d'un assemblage de plusieurs bandes assemblées en étant disposées de façon parallèle entre elles.

Il convient de noter que selon une construction préférée, le sens de déplacement de la bande circulaire 5 est inversé par rapport au sens de déplacement de la bande de transport supérieure 2. Cependant, pour opérer un pincement efficace, la vitesse de déplacement de la bande circulaire 5 contre la bande de transport supérieure 2 est identique à celle de la bande de transport supérieure 2. Les déplacements de ces deux bandes 2, 5 peuvent être opérés par des mécanismes d'entrainement indépendants ou par un mécanisme d'entrainement commun. Selon une spécificité de construction, l'entrainement de la bande circulaire 5 est opérée par le seul frottement de la bande de transport supérieure 2 contre laquelle la bande circulaire 5 est en maintenue en contact en pression.

Selon une particularité de construction, le mécanisme de retournement 1 est caractérisé en ce que, la bande circulaire 5 étant en appui contre une portion de la périphérie du cylindre 4 située sur une moitié du cylindre 4 définie par rapport à un plan vertical passant par l'axe de rotation du cylindre 4, la bande circulaire 5 est arrangée pour passer autour d'au moins deux rouleaux de guidage 6a, 6b disposés dans la portion de l'espace opposée à la portion du cylindre 4 en contact avec la bande circulaire 5 par rapport au plan vertical passant par l'axe de rotation du cylindre 4. Ces deux rouleaux de guidage 6a, 6b, disposés de façon stratégique par rapport au cylindre 4 autour duquel et avec lequel se déplace la bande de transport supérieure 2, permettent le déplacement de la bande circulaire 5 le long d'une partie de son circuit contre la bande de transport supérieure 2 et le cylindre 4. Ainsi, au cours de son circuit, la bande circulaire 5 se déplace successivement autour d'un premier rouleau de guidage 6a selon un premier sens de rotation, puis contourne le cylindre 4 contre la bande de transport supérieure 2 en se déplaçant selon un sens de rotation opposé au premier sens de rotation, et tourne ensuite autour du second rouleau de guidage 6b selon un sens de rotation identique à celui du premier rouleau de guidage 6a précédent.

Selon une particularité de construction, le premier rouleau de guidage 6a est suffisamment écarté de la bande de transport supérieure 2 pour réaliser un espace entre la bande circulaire 5 et la bande de transport supérieure 2 et faciliter l'insertion du produit entrainé en déplacement sur la bande de transport supérieure 2. Ainsi, le produit est progressivement pincé par la bande circulaire 5 lors de son entrainement en rotation autour du cylindre 4 par la bande de transport supérieure 2, au-dessus de la bande de transport supérieure 2.

De même, selon une autre particularité de construction, le second rouleau de guidage 6b est suffisamment écarté de la bande de transport supérieure 2 pour réaliser un espace entre la bande circulaire 5 et la bande de transport supérieure 2, en dessous de la bande de transport supérieure 2. Cet arrangement est réalisé de façon à permettre au produit d'être écarté et récupéré déposé sur la bande circulaire 5 avant son dépôt sur la seconde bande de transport inférieure 3.

Selon une particularité de construction de la bande circulaire 5 est associée à un mécanisme de maintien en tension 7 d'au moins une portion contre la première bande de transport 2 en circulation sur une portion de la périphérie du cylindre 4. Le mécanisme de maintien en tension 7 intervient sur la bande circulaire 5 de façon à, d'une part, générer une tension de sorte qu'une portion de la bande circulaire 5 exerce une pression contre la première bande de transport 2 et, d'autre part, gérer un relâchement de bande circulaire 5 de sorte que son déplacement s'effectue avec au moins une fluidité optimisée au regard des contraintes de tension supportées.

Selon une spécificité de construction, le mécanisme de maintien en tension 7 comprend au moins un rouleau 7a monté en translation selon un axe compris dans un plan perpendiculaire à l'axe de rotation du cylindre 4. La translation du rouleau 7a le long de cet axe particulier permet un écartement ou un rapprochement du rouleau 7a par rapport aux différents rouleaux de guidage, de sorte que le circuit de déplacement de la bande circulaire 5 se trouve étiré/allongé ou à l'inverse resserré. Selon un exemple de réalisation, le rouleau 7a est associé à un axe de translation formé par au moins un rail. Cette association entre le rouleau 7a et le rail est préférentiellement réalisée au niveau d'une des extrémités du rouleau 7a. De façon complémentaire, chaque extrémité du rouleau 7a est monté coulissant le long d'un rail respectif, les rails positionnés à chacune des extrémités du rouleau 7a étant disposés selon des axes parallèles entre eux.

Selon une particularité de construction du mécanisme de retournement 1 de l'invention, au moins une portion de la bande circulaire 5 positionnée autour d'un rouleau de guidage 6b, est positionnée en dessous de la première bande de transport supérieure 2 et au-dessus de la seconde bande de transport inférieure 3. Un tel positionnement de cette portion de la bande circulaire 5 permet à la bande circulaire 5, en étant d'une part positionnée sous la première bande de transport supérieure 2, de compléter le retournement du produit et de former une structure transporteuse qui porte le produit retourné et, en étant d'autre part positionnée au-dessus de la seconde bande de transport inférieure 3, de procéder au dépôt du produit retourné sur la seconde bande de transport inférieure 3.

Le transfert du produit retourné entre la bande circulaire 5 et la seconde bande de transport inférieure 3 est réalisé par simple gravité lorsque le produit entrainé en déplacement par la bande circulaire 5, dépasse le point de retournement de la bande circulaire 5 autour du rouleau de guidage 6b. Au niveau de ce point de retournement, la bande circulaire 5 pivote autour du rouleau de guidage 6b. Le produit supporté par la bande circulaire 5 n'étant pas maintenu sur la bande, il chute sur la seconde bande de transport inférieure 3.

Selon une particularité de construction, le rouleau de guidage 6b positionné entre la première bande de transport supérieure 2 et la seconde bande de transport inférieure 3 est disposé au plus près de la seconde bande inférieure 3, de sorte que la partie de la bande circulaire 5 positionnée sous le rouleau de guidage 6b soit rapprochée de la seconde bande de transport inférieure 3 sans être en contact avec cette bande 3. Un tel arrangement permet de limiter la hauteur de chute du produit lors de sa dépose sur la seconde bande de transport inférieure 3 depuis la bande circulaire 5.

Selon une alternative de construction du moyen de pincement, celui-ci comprend au moins une structure rigide montée pivotante autour d'un axe parallèle à l'axe de rotation du cylindre 4 et comportant au moins une portion en appui contre une partie de la première bande de transport supérieure 2 sur la surface périphérique du cylindre 4. Selon cette construction qui forme une alternative à la bande circulaire 5, la structure rigide du moyen de pincement exerce une pression par une de ses faces contre la surface de la première bande de transport supérieure 2.

Selon une particularité de cette construction, la portion en appui contre la surface périphérique du cylindre 4 présente une forme sensiblement incurvée. L'incurvation de cette portion est adaptée pour épouser au mieux la courbure de la première bande de transport supérieure 2 en déplacement sur le cylindre 4. Cette coopération de forme permet ainsi au moyen de pincement de presser le produit contre la première bande de transport supérieure 2 le long d'une portion plus importante de la périphérie du cylindre 4 et donc d'assurer un maintien du produit, au cours de son retournement, sur une longueur plus importante de la course.

Selon une autre particularité, la structure rigide pivotante du moyen de pincement coopère avec un mécanisme de rappel, par exemple un ressort, pour maintenir le moyen de pincement en appui contre le produit en retournement avec la première bande de transport supérieure 2. Alternativement, ce mécanisme de rappel peut faire intervenir la seule gravité pour conserver le moyen de pincement contre le produit et la première bande de transport supérieure 2.

Selon une caractéristique complémentaire, le bord inférieur de la structure rigide du moyen de pincement est arrangé pour être positionnée à proximité de la seconde bande de transport inférieure 3. Cet arrangement permet ainsi d'obtenir une dépose du produit sur la seconde bande de transport inférieure 3 depuis le bord inférieur de la structure rigide du moyen de pincement en limitant la hauteur de chute lors de la dépose du produit.

Selon une autre alternative de construction du moyen de pincement, celui-ci comprend une surface maintenue en pression par au moins une partie contre la première bande de transport supérieure 2 en circulation sur une portion de la périphérie du cylindre 4, cette surface s'étendant entre une position haute située au-dessus de la première bande de transport supérieure 2 et une position basse située en dessous de la première bande de transport inférieure 3. Cette surface comporte une souplesse qui lui permet, d'une part, d'épouser la courbure de la première bande de transport supérieure 2 au niveau de son déplacement autour du cylindre 4 et, d'autre part, de s'adapter aux variations de l'épaisseur du faisceau de fils étalé et en déplacement sur la bande de transport supérieure 2 et en rotation sur le cylindre 4.

Selon différentes variantes de construction, la surface souple peut être réalisée sous la forme d'une toile, d'un film ou d'une membrane ou encore sous la forme d'un tricot ou d'un filet ou encore d'un assemblage de plusieurs bandes assemblées en étant disposées de façon parallèle entre elles.

Selon une particularité de construction, la surface est maintenue en tension par au moins un moyen élastique qui réalise une jonction entre la toile et un bâti. Selon un exemple de construction non-limitatif, la surface présente un format rectangulaire et est maintenue en tension par un moyen élastique positionné à chacun de ses coins. Au moins la partie centrale de la surface se trouve alors positionnée de façon à recouvrir la bande de transport supérieure 2 au niveau de son déplacement autour du cylindre 4. Ce recouvrement est réalisé de façon à comporter un espace entre le bord supérieur de la surface et la bande de transport supérieure 2, au-dessus de la bande de transport supérieure 2, de façon à y faciliter l'insertion du produit entraîné en déplacement sur la bande de transport supérieure 2.

De même, de façon préférée, le recouvrement par la surface est effectué de façon à réaliser un espace avec la bande de transport supérieure 2, en dessous de la bande de transport supérieure 2. Cet arrangement est réalisé de façon à permettre au produit d'être écarté et récupéré sur la surface avant d'être entraîné et déposé par gravité sur la seconde bande de transport inférieure 3.

L'invention porte sur dispositif de traitement thermique de fils, caractérisé en ce que le dispositif comprend une structure formant une étuve comprenant une première ouverture pour une entrée de fil et une seconde ouverture pour une sortie de fil, et intégrant au moins deux bandes de transport superposées et au moins un mécanisme de retournement selon l'invention. A l'inverse d'un dispositif de traitement de fils de type connu qui n'intègre aucun mécanisme de retournement de l'invention et dans lequel le déplacement du fil n'est réalisé que par l'intermédiaire d'une unique bande de transport, le dispositif de traitement thermique de l'invention autorise une superposition de plusieurs bandes de transport 2, 3 dont les sens de déplacement sont inversés. Une telle superposition de bande de transport 2, 3 permet alors une réduction de la surface occupée au sol par le dispositif de traitement thermique, voire une réduction du volume totale de l'étuve et donc de la quantité d'énergie nécessaire pour l'application à un traitement thermique.

Selon une forme alternative du dispositif de traitement thermique de l'invention, celui-ci comprend :
- trois bandes de transport superposées arrangées de façon à définir une première bande de transport supérieure, une deuxième bande intermédiaire de transport et une troisième bande de transport inférieure,
- deux mécanismes de retournement arrangés de sorte que le premier mécanisme est positionné pour opérer un retournement depuis la bande supérieure vers la bande intermédiaire et que le second mécanisme est positionné pour opérer un retournement depuis la bande de transport intermédiaire vers la bande de transport inférieure,
la bande de transport supérieure étant positionnée depuis l'ouverture d'entrée vers le premier mécanisme de retournement et la bande de transport inférieure étant positionnée depuis le second mécanisme de retournement vers la sortie du dispositif.

Le dispositif de traitement thermique peut également se rapporter à un dispositif de traitement plus spécifique par exemple de type vapeur.

Une telle construction avec un nombre impair de bande de transport permet le positionnement d'une ouverture d'entrée et d'une ouverture de sortie du dispositif au niveau de faces différentes du dispositif.

## Revendications

1. Dispositif de traitement thermique d'au moins un fil comprenant une structure formant une étuve comportant une première ouverture pour une entrée de fil et une seconde ouverture pour une sortie de fil, et intégrant au moins deux bandes de transport superposées formées par une première bande de transport supérieure (2) et une seconde bande de transport inférieure (3) et au moins un mécanisme de retournement (1) d'un produit déposé entre la première bande de transport supérieure (2) et la seconde bande de transport inférieure (3), la première bande de transport (2) étant associée à au moins un cylindre (4) à une extrémité, **caractérisé en ce que** le mécanisme de retournement (1) comprend au moins un moyen de pincement de produit déposé contre la première bande de transport (2) en déplacement sur une portion de la périphérie du cylindre (4).

2. Dispositif de traitement thermique d'au moins un fil selon la revendication 1, **caractérisé en ce que** le moyen de pincement comprend au moins une bande circulaire (5) entraînée autour de plusieurs rouleaux de guidage (6).

3. Dispositif de traitement thermique d'au moins un fil selon la revendication 2, **caractérisé en ce que**, la bande circulaire (5) étant en appui contre une portion de la périphérie du cylindre (4) située sur une moitié du cylindre (4) définie par rapport à un plan vertical passant par l'axe de rotation du cylindre (4), la bande circulaire (5) est arrangée pour passer autour d'au moins deux rouleaux de guidage (6a, 6b) disposés dans la portion de l'espace opposée à la portion du cylindre (4) en contact avec la bande circulaire (5) par rapport au plan vertical passant par l'axe de rotation du cylindre (4).

4. Dispositif de traitement thermique d'au moins un fil selon une des revendications 2 ou 3, **caractérisé en ce que** la bande circulaire (5) est associée à un mécanisme de maintien en tension (7) d'au moins une portion contre la première bande de transport (2) en circulation sur une portion de la périphérie du cylindre (4).

5. Dispositif de traitement thermique d'au moins un fil selon la revendication 4, **caractérisé en ce que** le mécanisme de maintien en tension (7) comprend au moins un rouleau (7a) monté en translation selon un axe compris dans un plan perpendiculaire à l'axe de rotation du cylindre (4).

6. Dispositif de traitement thermique d'au moins un fil selon une des revendications 2 à 5, **caractérisé en ce que** au moins une portion de la bande circulaire (5) positionnée autour d'un rouleau de guidage (6b), est positionnée en dessous de la première bande de transport supérieure (2) et au-dessus de la seconde bande de transport inférieure (3).

7. Dispositif de traitement thermique d'au moins un fil selon les revendications 3 à 6, **caractérisé en ce que** le rouleau de guidage (6b) positionné entre la première bande de transport supérieure (2) et la seconde bande de transport inférieure (3) est disposé au plus près de la seconde bande inférieure (3), de sorte que la partie de la bande circulaire (5) positionnée sous le rouleau de guidage (6b) soit rapprochée de la seconde bande de transport inférieure (3) sans être en contact avec cette bande (3).

8. Dispositif de traitement thermique d'au moins un fil selon la revendication 1, **caractérisé en ce que** le moyen de pincement comprend au moins une structure rigide montée pivotante autour d'un axe parallèle à l'axe de rotation du cylindre (4) et comportant au moins une portion en appui contre une partie de la première bande de transport supérieure (2) sur la surface périphérique du cylindre (4).

9. Dispositif de traitement thermique d'au moins un fil selon la revendication 8, **caractérisé en ce que** la portion en appui contre une partie de la première bande de transport supérieure (2) sur la surface périphérique du cylindre (4) présente une forme sensiblement incurvée.

10. Dispositif de traitement thermique d'au moins un fil selon la revendication 1, **caractérisé en ce que** le moyen de pincement comprend une surface maintenue en pression par au moins une partie contre la première bande de transport supérieure (2) en circulation sur une portion de la périphérie du cylindre (4), cette surface s'étendant entre une position haute située au-dessus de la première bande de transport supérieure (2) et une position basse située en dessous de la seconde bande de transport inférieure (3).

11. Dispositif de traitement thermique d'au moins un fil selon la revendication 10, **caractérisé en ce que** la surface est maintenue en tension par au moins un moyen élastique qui réalise une jonction entre la surface et un bâti.

12. Dispositif de traitement thermique d'au moins un fil comprenant une structure formant une étuve comportant une première ouverture pour une entrée de fil et une seconde ouverture pour une sortie de fil, et intégrant trois bandes de transport superposées arrangées de façon à définir une première bande de transport supérieure, une deuxième bande intermédiaire de transport et une troisième bande de transport inférieure, le dispositif comprenant deux mécanismes de retournement, la bande supérieure étant positionnée depuis l'ouverture d'entrée vers le premier mécanisme de retournement et la bande inférieure étant positionnée depuis le second mécanisme de retournement vers la sortie du dispositif, les deux mécanismes de retournement étant arrangés de sorte que le premier mécanisme est positionné pour opérer un retournement d'un produit déposé entre bande de transport supérieure vers la bande de transport intermédiaire, la bande de transport supérieure étant associée à au moins un premier cylindre à une extrémité, et de sorte que le second mécanisme est positionné pour opérer un retournement d'un produit déposé entre la bande de transport intermédiaire vers la bande de transport inférieure, la bande intermédiaire étant associée à au moins un deuxième cylindre à une extrémité, **caractérisé en ce que** le premier mécanisme de retournement comprend au moins un premier moyen de pincement de produit déposé contre la bande de transport supérieure en déplacement sur une portion de la périphérie du premier cylindre, et que le deuxième mécanisme de retournement comprend au moins un deuxième moyen de pincement de produit déposé contre la bande de transport intermédiaire en déplacement sur une portion de la périphérie du deuxième cylindre.

## Patentansprüche

1. Vorrichtung zur Wärmebehandlung wenigstens eines Fadens, welche eine einen Ofen bildende Struktur, die eine erste Öffnung für einen Fadeneintritt und eine zweite Öffnung für einen Fadenaustritt aufweist und in die wenigstens zwei übereinanderliegende Transportbänder, die von einem oberen ersten Transportband (2) und einem unteren zweiten Transportband (3) gebildet werden, integriert sind, und wenigstens einen Mechanismus zur Umlenkung (1) eines abgelegten Produkts zwischen dem oberen ersten Transportband (2) und dem unteren zweiten Transportband (3) umfasst, wobei das erste Transportband (2) an einem Ende mit wenigstens einer Trommel (4) verbunden ist, **dadurch gekennzeichnet, dass** der Umlenkmechanismus (1) wenigstens ein Mittel zum Andrücken eines abgelegten Produkts an das sich auf einem Abschnitt des Umfangs der Trommel (4) bewegende erste Transportband (2) umfasst.

2. Vorrichtung zur Wärmebehandlung wenigstens eines Fadens nach Anspruch 1, **dadurch gekennzeichnet, dass** das Mittel zum Andrücken wenigstens ein umlaufendes Band (5) umfasst, das um mehrere Führungsrollen (6) herum angetrieben wird.

3. Vorrichtung zur Wärmebehandlung wenigstens eines Fadens nach Anspruch 2, **dadurch gekennzeichnet, dass**, wenn das umlaufende Band (5) an einem Abschnitt des Umfangs der Trommel (4) anliegt, der sich auf einer Hälfte der Trommel (4) befindet, die in Bezug auf eine durch die Drehachse der Trommel (4) verlaufende vertikale Ebene definiert ist, das umlaufende Band (5) so eingerichtet ist, dass es um wenigstens zwei Führungsrollen (6a, 6b) herum verläuft, die in dem Abschnitt des Raumes angeordnet sind, der in Bezug auf die durch die Drehachse der Trommel (4) verlaufende vertikale Ebene dem Abschnitt der Trommel (4) gegenüberliegt, der sich mit dem umlaufenden Band (5) in Kontakt befindet.

4. Vorrichtung zur Wärmebehandlung wenigstens eines Fadens nach einem der Ansprüche 2 oder 3, **dadurch gekennzeichnet, dass** das umlaufende Band (5) mit einem Mechanismus zur Aufrechterhaltung der Spannung (7) wenigstens eines Abschnitts verbunden ist, der an dem ersten Transportband (2) anliegt, das auf einem Abschnitt des Umfangs der Trommel (4) umläuft.

5. Vorrichtung zur Wärmebehandlung wenigstens eines Fadens nach Anspruch 4, **dadurch gekennzeichnet, dass** der Mechanismus zur Aufrechterhaltung der Spannung (7) wenigstens eine Rolle (7a) umfasst, die translatorisch verschiebbar entlang einer Achse angebracht ist, die in einer zur Drehachse der Trommel (4) senkrechten Ebene verläuft.

6. Vorrichtung zur Wärmebehandlung wenigstens eines Fadens nach einem der Ansprüche 2 bis 5, **dadurch gekennzeichnet, dass** wenigstens ein Abschnitt des umlaufenden Bandes (5), der um eine Führungsrolle (6b) herum positioniert ist, unter dem oberen ersten Transportband (2) und oberhalb des unteren zweiten Transportbandes (3) positioniert ist.

7. Vorrichtung zur Wärmebehandlung wenigstens eines Fadens nach den Ansprüchen 3 bis 6, **dadurch gekennzeichnet, dass** die Führungsrolle (6b), die zwischen dem oberen ersten Transportband (2) und dem unteren zweiten Transportband (3) positioniert ist, so nahe wie möglich am unteren zweiten Band (3) angeordnet ist, so dass der unter der Führungsrolle (6b) positionierte Teil des umlaufenden Bandes (5) an das untere zweite Transportband (3) angenähert ist, ohne sich mit diesem Band (3) in Kontakt zu befinden.

8. Vorrichtung zur Wärmebehandlung wenigstens eines Fadens nach Anspruch 1, **dadurch gekennzeichnet, dass** das Mittel zum Andrücken wenigstens eine starre Struktur umfasst, die um eine zur Drehachse der Trommel (4) parallele Achse schwenkbar gelagert ist und wenigstens einen Abschnitt aufweist, der an einem Teil des oberen ersten Transportbandes (2) auf der Umfangsfläche der Trommel (4) anliegt.

9. Vorrichtung zur Wärmebehandlung wenigstens eines Fadens nach Anspruch 8, **dadurch gekennzeichnet, dass** der Abschnitt, der an einem Teil des oberen ersten Transportbandes (2) auf der Umfangsfläche der Trommel (4) anliegt, eine im Wesentlichen gekrümmte Form aufweist.

10. Vorrichtung zur Wärmebehandlung wenigstens eines Fadens nach Anspruch 1, **dadurch gekennzeichnet, dass** das Mittel zum Andrücken eine Fläche umfasst, die wenigstens mit einem Teil an das obere erste Transportband (2) angedrückt gehalten wird, das auf einem Abschnitt des Umfangs der Trommel (4) umläuft, wobei sich diese Fläche zwischen einer oberen Position, die sich oberhalb des oberen ersten Transportbandes (2) befindet, und einer unteren Position, die sich unter dem unteren zweiten Transportband (3) befindet, erstreckt.

11. Vorrichtung zur Wärmebehandlung wenigstens eines Fadens nach Anspruch 10, **dadurch gekennzeichnet, dass** die Fläche von wenigstens einem elastischen Mittel, welches eine Verbindung zwischen der Fläche und einem Gestell herstellt, unter Spannung gehalten wird.

12. Vorrichtung zur Wärmebehandlung wenigstens eines Fadens, welche eine einen Ofen bildende Struktur umfasst, die eine erste Öffnung für einen Fadeneintritt und eine zweite Öffnung für einen Fadenaustritt aufweist und in die drei übereinanderliegende Transportbänder integriert sind, die so angeordnet sind, dass sie ein oberes erstes Transportband, ein dazwischenliegendes zweites Transportband und ein unteres drittes Transportband definieren, wobei die Vorrichtung zwei Umlenkmechanismen umfasst, wobei das obere Band von der Eintrittsöffnung zum ersten Umlenkmechanismus hin positioniert ist und das untere Band vom zweiten Umlenkmechanismus zum Austritt der Vorrichtung hin positioniert ist, wobei die zwei Umlenkmechanismen so eingerichtet sind, dass der erste Mechanismus so positioniert ist, dass er eine Umlenkung eines abgelegten Produkts vom oberen Transportband zum dazwischenliegenden Transportband bewirkt, wobei das obere Transportband an einem Ende mit wenigstens einer ersten Trommel verbunden ist, und so, dass der zweite Mechanismus so positioniert ist, dass er eine Umlenkung eines abgelegten Produkts vom dazwischenliegenden Transportband zum unteren Transportband bewirkt, wobei das dazwischenliegende Band an einem Ende mit wenigstens einer zweiten Trommel verbunden ist, **dadurch gekennzeichnet, dass** der erste Umlenkmechanismus wenigstens ein erstes Mittel zum Andrücken eines abgelegten Produkts an das sich auf einem Abschnitt des Umfangs der ersten Trommel bewegende obere Transportband umfasst und dass der zweite Umlenkmechanismus wenigstens ein zweites Mittel zum Andrücken eines abgelegten Produkts an das sich auf einem Abschnitt des Umfangs der zweiten Trommel bewegende dazwischenliegende Transportband umfasst.

## Claims

1. Device for the thermal treatment of at least one yarn, comprising a structure forming an oven having a first opening for the infeed of yarn and a second opening for the outfeed of yarn, and incorporating at least two superposed conveyor belts formed by a first upper conveyor belt (2) and a second lower conveyor belt (3) and at least one mechanism (1) for reversing a deposited product between the first upper conveyor belt (2) and the second lower conveyor belt (3), the first conveyor belt (2) being associated with at least one cylinder (4) at one end, **characterized in that** the reversal mechanism (1) comprises at least one means for clamping the deposited product against the first conveyor belt (2) in movement on a portion of the periphery of the cylinder (4).

2. Device for the thermal treatment of at least one yarn according to Claim 1, **characterized in that** the clamping means comprises at least one circular belt (5) driven around a plurality of guide rollers (6).

3. Device for the thermal treatment of at least one yarn according to Claim 2, **characterized in that**, since the circular belt (5) bears against a portion of the periphery of the cylinder (4) situated over half of the cylinder (4) as defined with respect to a vertical plane passing through the axis of rotation of the cylinder (4), the circular belt (5) is arranged so as to pass around at least two guide rollers (6a, 6b) which are disposed in the portion of the space that is opposite the portion of the cylinder (4) in contact with the circular belt (5) with respect to the vertical plane passing through the axis of rotation of the cylinder (4).

4. Device for the thermal treatment of at least one yarn according to either of Claims 2 and 3, **characterized in that** the circular belt (5) is associated with a mechanism (7) for maintaining the tension of at least one portion against the first conveyor belt (2) in circulation on a portion of the periphery of the cylinder (4).

5. Device for the thermal treatment of at least one yarn according to Claim 4, **characterized in that** the tension-maintaining mechanism (7) comprises at least one roller (7a) mounted in translation along an axis comprised in a plane perpendicular to the axis of rotation of the cylinder (4).

6. Device for the thermal treatment of at least one yarn according to one of Claims 2 to 5, **characterized in that** at least one portion of the circular belt (5) positioned around a guide roller (6b) is positioned below the first upper conveyor belt (2) and above the second lower conveyor belt (3) .

7. Device for the thermal treatment of at least one yarn according to Claims 3 to 6, **characterized in that** the guide roller (6b) positioned between the first upper conveyor belt (2) and the second lower conveyor belt (3) is disposed as close as possible to the second lower belt (3), such that the part of the circular belt (5) positioned under the guide roller (6b) is brought towards the second lower conveyor belt (3) without being in contact with this belt (3) .

8. Device for the thermal treatment of at least one yarn according to Claim 1, **characterized in that** the clamping means comprises at least one rigid structure mounted so as to pivot about an axis parallel to the axis of rotation of the cylinder (4) and having at least one portion that bears against a part of the first upper conveyor belt (2) on the peripheral surface of the cylinder (4).

9. Device for the thermal treatment of at least one yarn according to Claim 8, **characterized in that** the portion that bears against a part of the first upper conveyor belt (2) on the peripheral surface of the cylinder (4) has a substantially curved shape.

10. Device for the thermal treatment of at least one yarn according to Claim 1, **characterized in that** the clamping means comprises a surface maintained under pressure by way of at least one part against the first upper conveyor belt (2) in circulation on a portion of the periphery of the cylinder (4), this surface extending between a top position situated above the first upper conveyor belt (2) and a bottom position situated below the second lower conveyor belt (3).

11. Device for the thermal treatment of at least one yarn according to Claim 10, **characterized in that** the surface is maintained under tension by at least one elastic means which produces a junction between the surface and a frame.

12. Device for the thermal treatment of at least one yarn, comprising a structure forming an oven having a first opening for the infeed of yarn and a second opening for the outfeed of yarn, and incorporating three superposed conveyor belts arranged so as to define a first upper conveyor belt, a second intermediate conveyor belt and a third lower conveyor belt, the device comprising two reversal mechanisms, the upper belt being positioned from the infeed opening to the first reversal mechanism and the lower belt being positioned from the second reversal mechanism to the outfeed of the device, the two reversal mechanisms being arranged such that the first mechanism is positioned to perform a reversal of a deposited product between the upper conveyor belt to the intermediate conveyor belt, the upper conveyor belt being associated with at least one first cylinder at one end, and such that the second mechanism is positioned to perform a reversal of a deposited product between the intermediate conveyor belt to the lower conveyor belt, the intermediate belt being associated with at least one second cylinder at one end, **characterized in that** the first reversal mechanism comprises at least one first means for clamping the deposited product against the upper conveyor belt in movement on a portion of the periphery of the first cylinder, and **in that** the second reversal mechanism comprises at least one second means for clamping the deposited product against the intermediate conveyor belt in movement on a portion of the periphery of the second cylinder.
